(19) **Europäisches Patentamt**
**European Patent Office**
**Office européen des brevets**

(11) **EP 4 707 020 A1**

(12) **EUROPEAN PATENT APPLICATION**

(43) Date of publication:
**11.03.2026 Bulletin 2026/11**

(21) Application number: **25197383.0**

(22) Date of filing: **21.08.2025**

(51) International Patent Classification (IPC):
**B60K 17/35** (2006.01)   **B60K 17/354** (2006.01)
**B60K 17/356** (2006.01)   **B60L 15/20** (2006.01)
**B60K 1/00** (2006.01)   **F16H 61/04** (2006.01)

(52) Cooperative Patent Classification (CPC):
**B60K 17/356; B60K 1/02; B60K 17/3515;**
**B60K 17/354; B60L 15/2054;** B60K 2001/001;
B60L 2220/42; B60L 2260/28; B60Y 2200/142;
F16H 2061/0422; F16H 2061/0425

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **28.08.2024 IT 202400019321**

(71) Applicant: **IVECO S.P.A.**
**10156 Torino (IT)**

(72) Inventors:
• **DSOUZA, Vivian**
**10156 TORINO (IT)**
• **STENNER, Patrick**
**10156 TORINO (IT)**
• **DEMIREL, Cahit**
**10156 TORINO (IT)**

(74) Representative: **Studio Torta S.p.A.**
**Via Viotti, 9**
**10121 Torino (IT)**

(54) **IMPROVED DRIVING SYSTEM ARCHITECTURE FOR A VEHICLE**

(57)    Driving system architecture (1) for a vehicle, comprising at least two driving system (2a, 2b, 2c) each comprising a pair of shafts (3a, 3b, 3c) each carrying at least a wheel (4a, 4b, 4c), at least an electric machine (Ma, Mb, Mc) and a transmission unit (6a, 6b, 6b) operatively interposed between the electric machine (Ma, Mb, Mc) and at least one shaft (3a, 3b, 3c), a first transmission unit (6a, 6b, 6c) of a first driving system (2a, 2b, 2c) among the at least two driving system (2a, 2b, 2c) defining a gear ratio different with respect to a second transmission unit (6a, 6b, 6c) of a second driving system (2a, 2b, 2c) among the at least two driving system (2a, 2b, 2c), each driving system (2a, 2b, 2c) being configured to operatively connect or disconnect said electric machine (Ma, Mb, Mc) with respect to at least one shaft (3a, 3b, 3c).

FIG. 2

## Description

### CROSS-REFERENCE TO RELATED APPLICATIONS

This patent application claims priority from Italian patent application no. 102024000019321 filed on August 28, 2024, the entire disclosure of which is incorporated herein by reference.

### TECHNICAL FIELD

The present invention concerns a driving architecture for a vehicle, in particular an driving system architecture for a heavy vehicle.

The present invention finds its preferred, although not exclusive, application in e-axles for commercial or heavy vehicles such as trucks, military vehicles or rescue vehicles. Reference will be made to this application by way of example below.

### BACKGROUND OF THE INVENTION

Vehicles tends more and more to be electrified in order to reduce their pollutant emissions. In particular, such need is furthermore felt in heavy vehicles such as trucks.

To this aim, electric driving system, such as e-axles, are provided to allow traction and regenerative braking of the vehicle. In the following the description will make reference to such embodiment for sake of clarity.

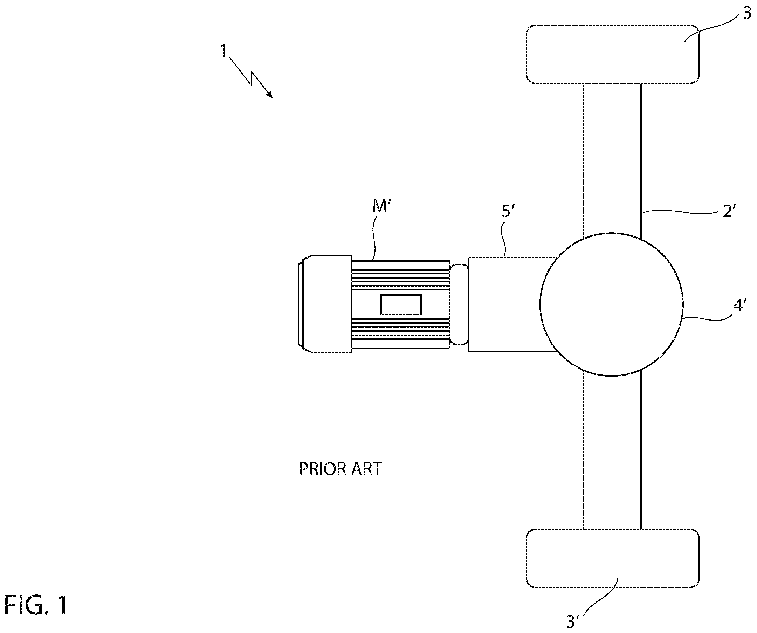

As per se known (see figure 1) an driving system architecture 1' comprises an axle 2' carrying a pair of wheels 3' and possibly provided with a differential assembly 4' interposed operatively between the wheels 3'. The differential assembly 4' exchange torque with a transmission unit 5' that is carried by at least one electric machine M'.

In order to allow the exchange of torque along an optimized interval to cover all possible operative conditions of the vehicle, the transmission unit 5' is configured to define at least one speed gear ratio, usually a plurality.

Accordingly, depending on the operative conditions, the user (or in case of automatic transmission gearshift an electronic control unit) controls the shift between the different gear ratio profiles provided by the transmission unit.

An driving system architecture 1' as the above described and known in the prior art clearly lead to multiple disadvantages. First, the transmission unit is expensive, bulky and complicated to manufacture.

Moreover, such transmission unit need peculiar maintenance and is more prone to failures due to the need of providing shifting between gears.

In addition, in order to reduce jet to the driver, a calibration process is performed that is expensive and complicated. Accordingly, costs and manufacturing time is increased.

Therefore, the need is felt to provide a driving system that solves the aforementioned drawbacks.

An aim of the present invention is to satisfy the above mentioned needs in a cost-effective and optimized manner.

### SUMMARY OF THE INVENTION

The aforementioned aim is reached by an driving system architecture a vehicle and a related control system as claimed in the appended set of claims that are integral part of the present description.

### BRIEF DESCRIPTION OF DRAWINGS

For a better understanding of the present invention, a preferred embodiment is described in the following, by way of a non-limiting example, with reference to the attached drawings wherein:

- Figure 1 is a schematic representation of an driving system architecture as known in the art;
- Figure 2 is a schematic representation of a first embodiment of an driving system according to the present invention; and
- Figure 3 is a schematic representation of a first embodiment of an driving system according to the present invention.

### DETAILED DESCRIPTION OF THE INVENTION

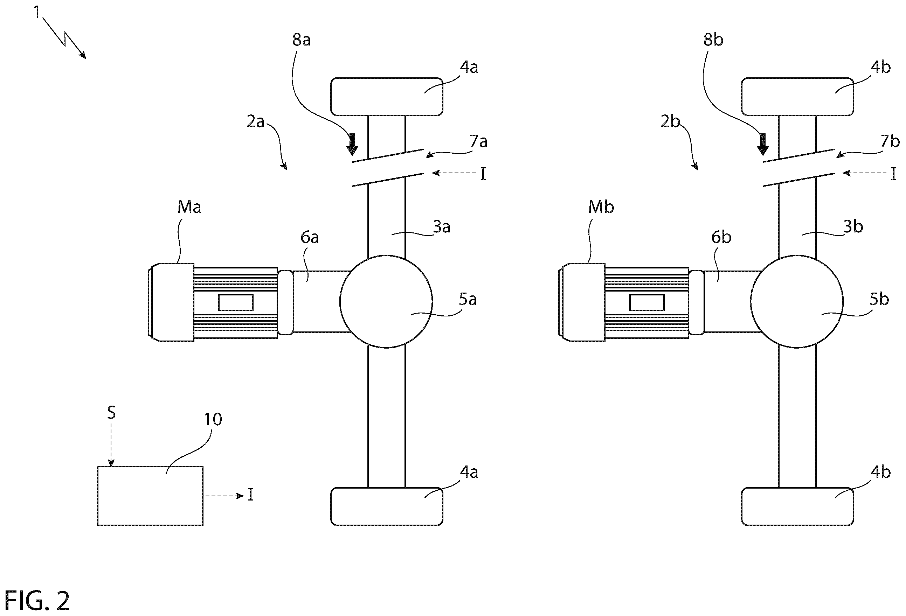

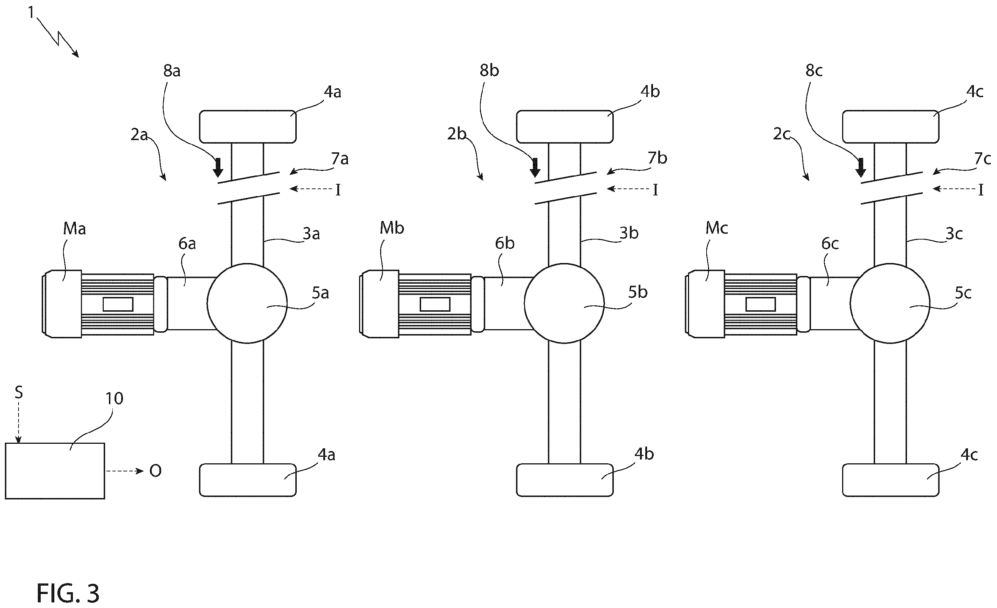

The attached figures 2 and 3 discloses an driving system architecture 1 according to the invention for a vehicle (not shown) such as a commercial/heavy vehicle e.g. a truck. In both embodiments, the driving system architecture 1 comprises at least a pair of driving systems 2a, 2b.

In the following, the description of a single driving system will be referred to a first driving system 2a, the other driving systems 2b, 2c comprise the same elements with the same reference numbers of the first driving system with the letter changed to b (for the second driving system) or to c (for the third driving system).

Each driving system 2a comprises at least one shaft 3a carrying at its extremity at least a wheel 4a. In the disclosed embodiments, each driving system 2 comprises a pair of shafts 3a each carrying at least a wheel 4a and connected together via a differential assembly 5a.

In detail, the driving system 2a comprises a transmission unit 6a operatively connected to the at least one shaft 3a or in particular in the disclosed embodiment to the differential assembly 5a.

The driving system 2a further comprises at least an electric machine Ma operatively connected to the at least one shaft 3a and, in the described embodiment, configured to exchange torque with the transmission unit 6a. In particular, the electric machine Ma is configured to provide a specific torque profile among a plurality of pre-set torque profiles.

With torque profile is intended the relation between torque provided by a machine via a rotating shaft while speed of such shaft varies.

According to the invention, the driving system assembly 1 comprises at least a second driving system 2b, in particular in the first embodiment of Figure 2 a second driving system 2b and in the second embodiment of Figure 3 a second and a third driving systems 2b, 2c.

Each at least second driving system 2b, 2c is realized similarly as the described above, in particular each driving system may be identical to the other.

The transmission units 6a, 6b, 6c each have a gear ratio different with respect to the other. In particular, the transmission unit 6a of the first driving system 2a defines a first gear ratio, the transmission unit 6b, 6c of the second and, in case, third driving system 2b, 2c defines a second and, in case, third gear ratio.

Each axle 2a, 2b, 2c comprises connection means 7a, 7b, 7c (schematized in the figures) configured to disconnect the at least one shaft 3a, 3b, 3c to the respective electric machine Ma, Mb, Mc, in particular via transmission units 6a, 6b, 6c.

Such connection means 7a, 7b, 7c may comprise, for instance, clutch means, dog clutches or other couplers that may be controlled by actuators 8a, 8b, 8c such as electric, hydraulic or pneumatic actuators.

In particular, the connection means 7a, 7b, 7c are controlled by electrically controlled actuators 8a, 8b, 8c.

In a not shown embodiment, connection means 7a, 7b, 7c may be substituted by the specific typology of electric machine M that can be operatively disconnected to the related axle 2a, 2b, 2c. For instance, such electric machines can be asynchronous machines that can be electrically connected or disconnected to the related shaft.

In a further not shown embodiment, if the gear ratio to be provided are in greater number than two or threes, transmission units 6a, 6b, 6c can provide a small number of different gear ratios.

The axle architecture 1 or the vehicle may comprise a control unit 10 configured to receive an input signal S, elaborate this latter and provide a control signal I to control the connection means 7a, 7b, 7c, in case by controlling actuators 8a, 8b, 8c.

In the disclosed embodiment, the control unit 10 is an electronic control unit 10 comprising elaboration means configured to receive an electric input signal S, elaborate this latter and provide an electric control signal I.

In detail, the input signal S may be provided by the user that selects a specific gear ratio to be provided via axle architecture 1 or can be calculated automatically on the base of operative data of the vehicle or transmitted by other vehicular electronic control unit.
Clearly, the control unit 10 can be further electrically connected to the electric machine Ma, Mb, Mc to select a specific torque profile among a plurality of preset torque profiles.

In the aforementioned not-shown embodiment, the control unit 10 may control the shift between the different gear ratios of the transmission units 6a, 6b, 6c, in combinations with the above mentioned torque profiles of the electric machine Ma, Mb, Mc.

The operation of the embodiment of the invention as described above is the following.

In the first embodiment (Figure 2) if the control signal S requires the vehicle to proceed with a first gear ratio, then the electronic control unit 10 will send control signal I to the actuators 8a of the first axle 2a to allow its connection to the related electric machine Ma while the control signal I to the actuators 8b of the second axle 2b allow its disconnection to the related electric machine Mb.

Conversely, if the control signal S requires the vehicle to proceed with a second gear ratio, then the electronic control unit 10 will send control signal I to the actuators 8a of the first axle 2a to allow its disconnection to the related electric machine Ma while the control signal I to the actuators 8b of the second axle 2b allow its connection to the related electric machine Mb.

Moreover, if the control signal S requires the vehicle to proceed with a third gear ratio, then the electronic control unit 10 will send control signal I to the actuators 8a, 8b of the first and second axles 2a, 2b to allow the connection of the respective electric machines Ma, Mb.

The operation of the second embodiment (Figure 3) is analogue to the operation of the first embodiment considering that three axles may be selected thereby providing possibly seven gear ratios.

Moreover, the electronic control unit 10 may select different torque profile of the electric machine Ma, Mb, Mc in addition to the selection of the specific axle 2a, 2b, 2c. Moreover, if present, a specific gear ratio of the transmission unit 6a, 6b, 6c may be selected.

In particular, providing as:

- n = the number of driving systems;
- k = the number of driving systems selected together;

wherein n and k are integer natural numbers, then the possible combinations of gear ratios may be resumed in the below formula:

$$\sum_{k=1}^{n} \binom{n}{k} + \prod_{k=1}^{n} \binom{n}{k}$$

The above number of gear ratios can be increased by summing the possible combinations due to different torque profiles given by the electric machine and, in case, by gear ratios of the transmission units.

In view of the above, the present invention further relates to a method for controlling an driving system architecture as described above and comprising the following steps:

> i) receiving an input signal S for providing a specific torque gear ratio via driving system architecture 1;
> ii) elaborating via control unit 10 the input signal S for providing a control signal I for connecting or disconnecting each shaft 3a, 3b, 3c to the specific electric machine Ma, Mb, Mc.

The aforementioned method may further comprise the following step executed in parallel to step ii):
iii) elaborating via control unit 10 the input signal S for selecting a specific torque profile provided by said electric machine Ma, Mb, Mc among a plurality of pre-set profiles.

The aforementioned method may further comprise (when transmission units can provide different gear ratios) the following step executed in parallel to step ii) and in case to step iii):
iv) elaborating via control unit 10 the input signal S for selecting a specific gear ratio provided by said transmission unit 6a, 6b, 6c.

The input signal S can be provided manually by the driver or elaborated on the base of operational data of the vehicle.

The above disclosed control method can be executed continuously or at pre-set time intervals.

In view of the foregoing, the advantages of an driving system architecture a vehicle and a related control system according to the invention are apparent.

Thanks to the provided axle architecture, it is possible to provide a wide number of gear ratio without the need of complicated, bulky and costly transmission units.

Moreover, thanks to the provided axle architecture, the testing procedure and timing are reduced, therefore the costs are decreased.

In addition, the comfort of the gear-shifting is increased since the timing for changing gear ratio is reduced. Indeed, there is only need of synchronizing the connection means with the electric machines without need of match speed in known gear ratio shifting.

The proposed driving system architecture can be provided to different layouts and typologies of vehicles with small modifications.

It is clear that modifications can be made to the described driving system architecture, vehicle and related control system which do not extend beyond the scope of protection defined by the claims.
For example, electric machines may be of many typologies, such as the connection means and their actuators.

Moreover, the number of driving systems can vary such as the number and typologies the electric machines.

Furthermore, the typology of driving systems can be different with respect to an e-axle, such as e-wheels.

As outlined above, many torque profiles may be provided by the electric machines and, possibly, different gear ratios can be provided by the transmission units.

## Claims

1. Driving system architecture (1) for a vehicle, said driving system architecture (1) comprising at least two driving systems (2a, 2b, 2c) each comprising at least a shaft (3a, 3b, 3c) each carrying at least one wheel (4a, 4b, 4c), at least one electric machine (Ma, Mb, Mc) and a transmission unit (6a, 6b, 6b) operatively interposed between the at least one electric machine (Ma, Mb, Mc) and said at least one shaft (3a, 3b, 3c),

   wherein a first transmission unit (6a, 6b, 6c) of a first driving system (2a, 2b, 2c) among said at least two driving systems (2a, 2b, 2c) defines a gear ratio different with respect to a second transmission unit (6a, 6b, 6c) of a second driving system (2a, 2b, 2c) among said at least two driving systems (2a, 2b, 2c),
   each driving system (2a, 2b, 2c) being configured to operatively connect or disconnect said at least one electric machine (Ma, Mb, Mc) with respect to said least one shaft (3a, 3b, 3c).

2. Driving system architecture according to claim 1, wherein at least two driving systems (2a, 2b, 2c) among said driving systems (2a, 2b, 2c) are configured to connect said at least one electric machine (Ma, Mb, Mc) with respect to said least one shaft (3a, 3b, 3c) at the same time

3. Driving system architecture according to claim 1 or 2, further comprising connection means (7a, 7b, 7c) configured to connect or disconnect operatively said at least one electric machine (Ma, Mb, Mc) with respect to said at least one shaft (3a, 3b, 3c).

4. Driving system architecture according to claim 3, further comprising actuator means (8a, 8b, 8c) configured to control said connection means (7a, 7b, 7c).

5. Driving system architecture according to claim 3 or 4, wherein said connection means (7a, 7b, 7c) comprise clutch means.

6. Driving system architecture claim 1 or 2, wherein said at least one electric machine (Ma, Mb, Mc) comprise asynchronous electric machines configured to electrically disconnect from said shaft (3a, 3b, 3c).

7. Driving system architecture according to any of the preceding claims, further comprising a control unit (10) configured to receive an input signal (S), elaborate this latter and provide a control signal (I) to control said connection means (7).

8. Driving system architecture according to claim 7, wherein said control unit (10) is an electronic control unit (10) comprising elaboration means to receive an electric input signal (S) and provide an electric control signal (I).

9. Driving system architecture according to any of the preceding claims, wherein said at least one electric machine (Ma, Mb, Mc) are configured to exchange torque with said transmission unit (6a, 6b, 6c) according to a torque profile among a plurality of pre-set torque profiles.

10. Driving system architecture according to any of the preceding claims, wherein said transmission unit (6a, 6b, 6c) are configured to provide a plurality of gear ratios between said at least one electric machine (Ma, Mb, Mc) and said at least one shaft (3a, 3b, 3c).

11. Driving system architecture according to any of the preceding claims, wherein given

   • n = the number of driving systems (2a, 2b, 2c);
   • k = the number of driving systems (2a, 2b, 2c) that can selected together;

wherein n and k are integer natural numbers, then the possible combinations of gear ratios applies according to the following equation

$$\sum_{k=1}^{n} \binom{n}{k} + \prod_{k=1}^{n} \binom{n}{k}$$

12. Vehicle comprising a driving system architecture (1) according to any of the preceding claims.

13. Method for controlling a driving system architecture (1) as claimed in any of the preceding claims depending on claim 7 comprising the following steps:

   i) receiving an input signal (S) for providing a specific torque gear ratio via driving system architecture (1);
   ii) elaborating via control unit (10) the input signal (S) for providing a control signal (I) for connecting or disconnecting each at least one shaft (3a, 3b, 3c) to the specific electric machine (Ma, Mb, Mc).

14. Control method according to claim 12 when depending on claim 9, further comprising the following step executed in parallel to step ii):

iii) elaborating via control unit (10) the input signal (S) for selecting a specific torque profile provided by said at least one electric machine (Ma, Mb, Mc) among a plurality of pre-set torque profiles.

15. Control method according to claim 11 when depending on claim 9, further comprising the following step executed in parallel to step ii):
iv) elaborating via control unit (10) the input signal (S) for selecting a specific gear ratio provided by said transmission unit (6a, 6b, 6c).

16. Control method according to claims 14 and 15.

17. Control method according to any of claims 13 to 16, wherein said input signal (S) is provided manually by a driver of said vehicle or elaborated on the base of operational data of said vehicle.

PRIOR ART

FIG. 1

6

FIG. 2

FIG. 3

EP 4 707 020 A1

Europäisches
Patentamt

European
Patent Office

Office européen
des brevets

# EUROPEAN SEARCH REPORT

**Application Number**

**EP 25 19 7383**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2010 020676 A1 (PORSCHE AG [DE]) 17 November 2011 (2011-11-17) | 1-6, 10-13, 15,17 | INV. B60K17/35 B60K17/354 |
| Y | * claims 1,3,5,8,9,10 * | 6 | B60K17/356 |
| A | | 9,14,16 | B60L15/20 |
| | ----- | | |
| X | US 2023/382221 A1 (SKÖLDBERG PER-ANDERS [SE] ET AL) 30 November 2023 (2023-11-30) | 1-8, 10-13, 15,17 | ADD. B60K1/00 F16H61/04 |
| Y | * paragraphs [0069], [0055]; claim 1; | 6 | |
| A | figures 1-6 * | 9,14,16 | |
| | ----- | | |
| X | DE 10 2016 014732 A1 (DAIMLER AG [DE]) 14 June 2018 (2018-06-14) | 1-8, 10-13, 15,17 | |
| A | * paragraphs [0026], [0028], [0030]; figures 1-2 * | 9,14,16 | |
| | ----- | | |

TECHNICAL FIELDS
SEARCHED (IPC)

B60K
B60L

The present search report has been drawn up for all claims

| Place of search | Date of completion of the search | Examiner |
|---|---|---|
| Munich | 23 January 2026 | Belz, Thomas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 19 7383

This annex lists the patent family members relating to the patent documents cited in the above-mentioned European search report.
The members are as contained in the European Patent Office EDP file on
The European Patent Office is in no way liable for these particulars which are merely given for the purpose of information.

23-01-2026

| Patent document cited in search report | Publication date | Patent family member(s) | Publication date |
|---|---|---|---|
| DE 102010020676 A1 | 17-11-2011 | NONE | |
| US 2023382221 A1 | 30-11-2023 | EP 4282684 A1 | 29-11-2023 |
| | | US 2023382221 A1 | 30-11-2023 |
| DE 102016014732 A1 | 14-06-2018 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT 102024000019321